# EUROPÄISCHE PATENTANMELDUNG

(11) **EP 1 648 075 A1**
(43) Veröffentlichungstag der Anmeldung: **19.04.2006**
(21) Anmeldenummer: 05021858.5
(22) Anmeldetag: 07.10.2005
(51) Int. Cl.: H02K 5/24, F16F 3/087

(54) **Haushaltsmaschine mit einem schwingungsgedämpften Motor**

(30) Priorität: 14.10.2004 DE 102004050262
(71) Anmelder: AWECO APPLIANCE SYSTEMS GmbH & Co. KG, 88099 Neukirch (DE)
(72) Erfinder: Kraffzik, Hans-Jürgen, 33279 Bielefeld (DE)
(74) Vertreter: Eisele, Otten, Roth & Dobler

(57) **Zusammenfassung**

Die Erfindung betrifft eine Haushaltsmaschine, insbesondere Geschirrspüler oder Waschmaschine, mit einem Motor, wobei wenigstens eine mindestens eine Dämpfungsvorrichtung umfassende Halteeinheit zum verstellbaren Halten des Motors vorgesehen ist, die dadurch gekennzeichnet ist, dass die Dämpfungsvorrichtung wenigstens ein erstes Dämpfungselement mit einer ersten Dämpfung und ein zweites Dämpfungselement mit einer zweiten Dämpfung aufweist.

## Beschreibung

Die Erfindung betrifft eine Haushaltsmaschine, insbesondere Geschirrspüler oder.Waschmaschine, mit einem Motor nach dem Oberbegriff des Anspruchs 1.

Bei bisherigen Motoren, insbesondere von Motoren einer Umwälzpumpe einer Geschirrspülmaschinen, treten im Betrieb Schwingungen auf. Diese Schwingungen bzw. die hiermit verbundenen Amplituden bzw. Amplitudenausschläge der Motoren sind vor allem in einer Anlaufphase, bei größerer Last bzw. Leistungsaufnahme und/oder prinzipbedingt bei Einphasen-Synchron-Motoren bzw. deren Torsionsschwingungen, die wirtschaftlich besonders günstig sind, relativ groß und sollten wirkungsvoll gedämpft bzw. abgefedert werden.. Im normalen Betrieb sind diese Schwingungen bzw. Amplituden vergleichsweise klein.

Entsprechende Haltevorrichtungen dieser Motoren sind bereits elastisch bzw. ermöglichen eine Bewegung des gehalterten. Motors. Nachteilig ist jedoch, die vergleichsweise schlechte Anpassung an die unterschiedlichen Betriebszustände, so dass entsprechende Halterungen im Lauf der Zeit beeinträchtigt werden bzw. verschleißen.

Aufgabe der Erfindung ist es, eine Haushaltmaschine mit einer Haltevorrichtung eines Motors vorzuschlagen, die den Stand der Technik verbessert.

Diese Aufgabe wird, ausgehend von einem Reibungsdämpfer der genannten Art, durch die kennzeichnenden Merkmale der Ansprüche 1 und/oder 2 gelöst. Durch die in den Unteransprüchen genannten Maßnahmen sind vorteilhafte Ausführungen und Weiterbildungen der Erfindung möglich.

Demnach zeichnet sich ein erfindungsgemäßer Reibungsdämpfer dadurch aus, dass wenigstens zwei, insbesondere unterschiedliche Dämpfungselemente und/oder eine amplitudenabhängige Dämpfung der Dämpfungsvorrichtung vorgesehen ist.

Hiermit ist in vorteilhafter Weise eine zweistufige Dämpfung realisierbar. Beispielsweise wird die erste Stufe mit nahezu keiner Dämpfung bzw. als Freihub verwirklicht. Hiermit können relativ kleine Amplitudenausschläge bzw. Schwingungen des Motors nahezu nicht bzw. lediglich sehr gering gedämpft bzw. abgefedert werden.

Vorteilhafterweise weist die zweite Stufe eine relativ starke Dämpfung auf. Hiermit können relativ große Amplitudenausschläge bzw. Schwingungen des Motors wirkungsvoll gedämpft bzw. abgefedert werden.

Vorzugsweise wird ein Anschlag bzw. Anschlagflächen insbesondere für das erste Dämpfungselement vorgesehen. In einer vorteilhaften Ausführungsform der Erfindung wird ein Anschlag für ein amplitudenabhängiges Dämpfungselement vorgesehen. Ein solcher Anschlag dient z.B. zum Einleiten der zweiten Stufe bzw. der zweiten Dämpfung und/oder zum Fixieren bzw. Aussetzen des ersten Dämpfungselemewtes bzw. der ersten Dämpfung.

Insbesondere ist es möglich, einen Anschlag stirnseitig an dem Dämpfungselement anzubringen. Eine solche Anordnung erleichtert die Druckbeaufschlagung eines entsprechenden zusätzlichen Dämpfungselementes.

Vorteilhafterweise umfassen das/die insbesondere amplitudenabhängigen Dämpfungselemente ein bezogen auf den montierten Zustand wenigstens in axialer Richtung und/oder quer zur axialen Richtung der Dämpfungsvorrichtung verformbares Material. Dies kann beispielsweise mit Hilfe eines Elastomers oder eines Schaumstoffs bewerkstelligt werden, wobei das Material vorteilhafterweise so gewählt wird, dass es eine Eigendämpfung bei der Rückverformung aufweist. Das letztgenannte Merkmal dient dazu, eine rückfedernde Wirkung zu vermindern oder ganz zu unterbinden und die dämpfende Wirkung der Dämpfungselemente hervorzuheben. Vorzugsweise wird ein dämpfendes und federndes Material gewählt.

Ein spritzgießbares Material ermöglicht eine besonders günstige Herstellung. Beispielsweise kann ein Strangpressprofil hergestellt werden, wobei durch Abschneiden einzelner Stücke die Dämpfungsvorrichtung und/oder.die Dämpfungselemente erzeugt werden.

Weiterhin kann durch entsprechende Ausbildung der amplitudenabhängigen Dämpfungselemente die Dämpfungscharakteristik wegabhängig eingestellt werden. Durch vorteilhafte Ausformungen bzw. Profilierungen verformbarer Elemente können beispielsweise gewünschte Kraft-Wegkurvenverläufe eingestellt werden.

Weitere Merkmale von Varianten der Erfindung sind in den Unteransprüchen aufgelistet, die insbesondere beliebig miteinander kombinierbar sind.

Ein Ausführungsbeispiel ist in der Zeichnung dargestellt und wird anhand der einzigen Figur nachfolgend erläutert.

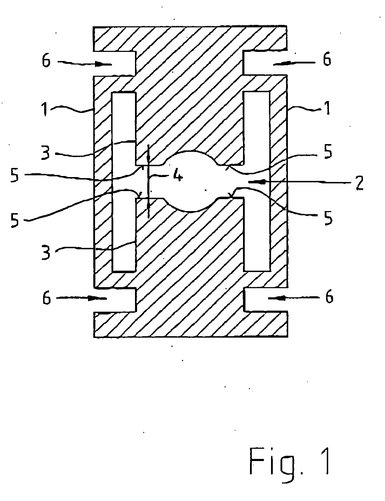

In Figur 1 ist ein schematischer Schnitt durch eine erfindungsgemäße Dämpfungsvorrichtung dargestellt. Dieses Beispiel umfasst zwei erste Dämpfungselemente 1 und ein zweites Dämpfungselement 2 bestehend aus zwei Dämpfungsteile 3. Zwischen den beiden Dämpfungsteilen 3 ist in Ruhestellung ein Abstand 4 ausgebildet. Stirnseitig weisen die beiden Dämpfungsteile 3 jeweils zwei Anschlagflächen 5 auf, an die das jeweils andere Dämpfungsteil 3'bei entsprechend großer Auslenkung bzw. Amplitude anschlägt. Das heißt, das die beiden Dämpfungsteile 3 aneinander anschlagen, wenn die Amplitude gleich als der Abstand 4 ist. Bis zu dieser Amplitude dämpft lediglich das erste Dämpfungselement 1.

Bei größerer Amplitude wie der Abstand 4, dämpft das zweite Dämpfungselement 2, so dass eine zweistufige bzw. amplitudenabhängige Dämpfung realisiert ist.

Weiterhin sind Nuten 6 bzw. Ausnehmungen 6 vorgesehen, die zum Fixieren bzw. Befestigen vorgesehne sind. Beispielsweise greifen hier Leisten ein, so dass die Haltevorrichtung vorteilhaft zum Halten eines nicht näher dargestellten Motors verwendet wird.

Die Dämpfungsvorrichtung gemäß Figur 1 ist vorzugsweise einstückig und insbesondere aus einem gummielastischen Material, das in vorteilhafter Weise spritzgießbar ist wie z.B. EPDM oder dergleichen.

## Patentansprüche

1. Haushaltsmaschine, insbesondere Geschirrspüler oder Waschmaschine, mit einem Motor, wobei wenigstens eine mindestens eine Dämpfungsvorrichtung umfassende Halteeinheit zum verstellbaren Halten des Motors vorgesehen ist, **dadurch gekennzeichnet, dass** die Dämpfungsvorrichtung wenigstens ein erstes Dämpfungselement mit einer ersten Dämpfung und ein zweites Dämpfungselement mit einer zweiten Dämpfung aufweist.

2. Haushaltsmaschine, insbesondere Geschirrspüler oder Waschmaschine, mit einem Motor nach dem Oberbegriff des Anspruchs 1, **dadurch gekennzeichnet, dass** die Dämpfungsvorrichtung wenigstens amplitudenabhängiges Dämpfungselement aufweist.

3. Haushaltsmaschine nach Anspruch 1 oder 2, **dadurch gekennzeichnet, dass** die Dämpfung des ersten Dämpfungselements unterschiedlich zur Dämpfung des zweiten Dämpfungselements ist.

4. Haushaltsmaschine nach einem der vorhergehenden Ansprüche, **dadurch gekennzeichnet, dass** die Dämpfung des ersten Dämpfungselements kleiner als die Dämpfung des zweiten Dämpfungselements ist.

5. Haushaltsmaschine nach einem der vorhergehenden Ansprüche, **dadurch gekennzeichnet, dass** bei kleiner Amplitude die Dämpfung des ersten Dämpfungselements und bei großer Amplitude die Dämpfung des zweiten Dämpfungselements vorgesehen ist.

6. Haushaltsmaschine nach einem der vorgenannten Ansprüche, **dadurch gekennzeichnet, dass** die Dämpfungsvorrichtung wenigstens einen Anschlag für wenigstens eines der Dämpfungselemente aufweist.

7. Haushaltsmaschine nach einem der vorgenannten Ansprüche, **dadurch gekennzeichnet, dass** das zweite Dämpfungselement wenigstens eine Anschlagfläche zum Anschlag des ersten Dämpfungselementes aufweist.

8. Haushaltsmaschine nach einem der vorgenannten Ansprüche **dadurch gekennzeichnet, dass** das zweite Dämpfungselement wenigstens zwei Dämpfungsteile aufweist.

9. Haushaltsmaschine nach einem der vorgenannten Ansprüche, **dadurch gekennzeichnet, dass** die zwei Dämpfungsteile wenigstens teilweise relativ zueinander verstellbar sind.

10. Haushaltsmaschine nach einem der vorgenannten Ansprüche, **dadurch gekennzeichnet, dass** wenigstens teilweise ein Abstand zwischen den zwei Dämpfungsteilen vorgesehen ist.

11. Haushaltsmaschine nach einem der vorgenannten Ansprüche,
**dadurch gekennzeichnet, dass** die zwei Dämpfungsteile des zweiten Dämpfungselements über das erste Dämpfungselements verbunden sind.

12. Haushaltsmaschine nach einem der vorgenannten Ansprüche, **dadurch gekennzeichnet, dass** die Dämpfungsvorrichtung als eine einzige Baueinheit ausgebildet ist.

13. Haushaltsmaschine nach einem der vorgenannten Ansprüche, **dadurch gekennzeichnet, dass** die Dämpfungsvorrichtung im Wesentlichen aus einem einzigen Material ist.

14. Haushaltsmaschine nach einem der vorgenannten Ansprüche **dadurch gekennzeichnet, dass** das Material der Dämpfungsvorrichtung dämpfend und/oder federnd ist.

15. Haushaltsmaschine nach einem der vorgenannten Ansprüche **dadurch gekennzeichnet, dass** das Material der Dämpfungsvorrichtung elastisch ist.

16. Haushaltsmaschine nach einem der vorgenannten Ansprüche **dadurch gekennzeichnet, dass** die Dämpfungsvorrichtung im Wesentlichen aus einem gummielastischen Material ist.

17. Haushaltsmaschine nach einem der vorgenannten Ansprüche **dadurch gekennzeichnet, dass** die Dämpfungsvorrichtung im Wesentlichen aus einem Schaum-Material ist.

18. Haushaltsmaschine nach einem der vorgenannten Ansprüche **dadurch gekennzeichnet, dass** die Dämpfungsvorrichtung im Wesentlichen aus einem spritzgussfähigen Material ist.

19. Haushaltsmaschine nach einem der vorgenannten Ansprüche **dadurch gekennzeichnet, dass** die Dämpfungsvorrichtung im Wesentlichen aus EPDM ist.
